# EUROPEAN PATENT SPECIFICATION

(11) **EP 2 659 968 B1**
(45) Date of publication and mention of the grant of the patent: **18.11.2015**
(21) Application number: 11852234.1
(22) Date of filing: 20.10.2011
(51) Int. Cl.: B01J 23/66, B01D 53/94, B01J 35/10, F01N 3/021, F01N 3/023, F01N 3/035, F01N 3/24, F01N 3/28

(54) **Use of a particulate combustion catalyst and a particulate filter, production methods therefor**
Verwendung eines teilchenförmigen Verbrennungskatalysators und eines Partikelfilters, Herstellungsverfahren dafür
Utilisation d'un catalyseur de combustion particulaire et d'un filtre particulaire, les procédés de production de ceux-ci

(30) Priority: 27.12.2010 JP 2010291099
(43) Date of publication of application: 06.11.2013
(73) Proprietor: MITSUI MINING & SMELTING CO., LTD., Tokyo 141-8584 (JP)
(72) Inventor: KOGAWA, Takahiro, Ageo-shi Saitama 362-0025 (JP); ABE, Akira, Ageo-shi Saitama 362-0025 (JP)
(74) Representative: Dossmann, Gérard
(86) International application number: PCT/JP2011/074188
(87) International publication number: WO 2012/090577

(56) References cited:
- EP-A1- 1 985 353
- EP-A2- 0 222 497
- WO-A1-2007/043442
- JP-A- 2002 346 386
- JP-A- 2004 057 949
- JP-A- 2005 007 360
- US-B1- 6 511 642
- PERSSON K ET AL: "Influence of co-metals on bimetallic palladium catalysts for methane combustion", JOURNAL OF CATALYSIS, ACADEMIC PRESS, DULUTH, MN, US, vol. 231, no. 1, 1 April 2005 (2005-04-01) , pages 139-150, XP004803506, ISSN: 0021-9517, DOI: 10.1016/J.JCAT.2005.01.001
- Sasol Germany Gmbh: "Sasol Germany GmbH PURALOX /CATALOX High purity activated aluminas", , 1 January 2003 (2003-01-01), XP055118776, Retrieved from the Internet: URL:http://www.sasoltechdata.com/tds/ALUCL OX.pdf [retrieved on 2014-05-19]
- HONG HE ET AL: "Novel Pd promoted Ag/Al2O3 catalyst for the selective reduction of NOx", APPLIED CATALYSIS. B, ENVIRONMENTAL, vol. 46, no. 2, 1 November 2003 (2003-11-01), pages 365-370, XP055118784, ISSN: 0926-3373, DOI: 10.1016/S0926-3373(03)00242-X

## Description

### Technical Field

The present invention relates to a particulate combustion catalyst, to a method for producing the particulate combustion catalyst, to a particulate filter, and to a method for producing the particulate filter. More particularly, the present invention relates to a particulate combustion catalyst which can remove, through oxidation, particulate matter discharged from an internal diesel engine, to a method for producing the catalyst, to a particulate filter including the particulate combustion catalyst supported by a substrate, and to a method for producing the filter.

### Background Art

Exhaust gas discharged from a diesel engine contains nitrogen oxide (NOₓ) and particulate matter (PM, particle-form substance), and release of such substances into the atmosphere without any treatment is a main cause of air pollution. Therefore, emission of these substances is required to be rigorously controlled. There have been proposed, as effective means for removing particulate matter, a flow-through-type oxidation catalyst for combusting an SOF (soluble organic fraction), and a diesel exhaust gas trapping system employing a diesel particulate filter (DPF) for trapping soot. However, the DPF must be regenerated by continuously or intermittently removing the particulate matter trapped therein through oxidation.

Hitherto, continuous regeneration systems which have been proposed include a system employing a catalyst containing a carrier made of an inorganic oxide (e.g., zirconium oxide, vanadium oxide, or cerium oxide), and an expensive noble metal (e.g., Pt) supported on the carrier (see, for example, Patent Document 1, 2, or 3), and a continuous regeneration method employing NO₂ (see, for example, Patent Document 4). In the continuous regeneration method, an oxidation catalyst (e.g., Pt) for conversion of NO to NO₂ via oxidation must be provided on the upstream side of DPF, which elevates cost. Also, the reaction with NO₂ occurs under limited conditions including the ratio of NOₓ to C, which is problematic.

There has also been proposed a particulate combustion catalyst containing no noble metal (i.e.,' expensive metal), which catalyst can remove soot through oxidation at lower temperature. In the presence of the catalyst, oxidation reaction proceeds only with oxygen. Thus, soot can be removed through oxidation at low temperature at any NOₓ concentration of exhaust gas. The particulate combustion catalyst includes a carrier formed of a cerium zirconium composite oxide having a cerium oxide content of 5 to 50 mass%, and a first catalyst which is formed of at least one metal of Ag and Ru or an oxide of the metal and which is supported on the carrier (see Patent Document 5).

### Prior Art Documents

### Patent Documents

Patent Document 1: Japanese Patent Application Laid-Open (*kokai*) No. Hei 10-047035
Patent Document 2: Japanese Patent Application Laid-Open (*kokai*) No. 2003-334443
Patent Document 3: Japanese Patent Application Laid-Open (*kokai*) No. 2004-058013
Patent Document 4: Japanese Patent No. 3012249
Patent Document 5: Japanese Patent No. 4144898

Exhaust gas purification catalysts for automobile are also described in EP 1 985 353. They comprise a platinum-palladium alloy component and a catalyst component containing platinum which are supported separately on a heat-resistant inorganic oxide. Moreover, the article "Influence of co-metals on bi-metallic palladium catalysts for methane combustion" of Persson K. et al, Journal of catalysis, Vol. 231, No. 1, 1 April 2005, p. 139-150, describes catalysts comprising palladium and one co-metal selected from Co, Rh, Ir, Ni, Pt, Cu, Ag and Au, and their use in the combustion of methane.

### Summary of the Invention

### Problems to be Solved by the Invention

An object of the present invention is to provide a particulate combustion catalyst, which can remove soot through oxidation at any NOₓ concentration of exhaust gas, since oxidation reaction proceeds only with oxygen; which has excellent heat resistance; and which, even after a long-term, high-temperature treatment, can remove soot through oxidation at low temperature and high combustion rate with only small amounts of HC and CO slipping through the catalyst (hereinafter called "amounts of HC slip and CO slip"). Another object of the invention is to provide a method for producing the catalyst. Still another object of the invention is to provide a particulate filter including the particulate combustion catalyst supported by a substrate. Yet another object of the invention is to provide a method for producing the filter.

### Means for Solving the Problems

In order to achieve the aforementioned objects, the present inventors have conducted extensive studies, and have found that the objects can be achieved by causing an Ag-Pd alloy having a compositional ratio falling within a specific range to be supported, as a catalytic component, on an alumina porous carrier whose pore size distribution profile, as determined by means of a mercury porosimeter, has a peak falling within a specific range. The present invention has been accomplished on the basis of this finding.

Accordingly, the particulate combustion catalyst of the present invention is characterized by comprising an alumina porous carrier whose pore size distribution profile, as determined by means of a mercury porosimeter, has a peak falling within a range of 10 to 100 nm, and, as a catalytic component, an alloy containing Ag in an amount of 75 to 25 mass% and Pd in an amount of 25 to 75 mass%, the alloy being supported on the surface of the alumina porous carrier and/or on the inner walls of pores of the alumina porous carrier.

The method for producing a particulate combustion catalyst of the present invention is characterized in that the method comprises impregnating an alumina porous carrier whose pore size distribution profile, as determined by means of a mercury porosimeter, has a peak falling within a range of 10 to 100 nm, with an aqueous solution containing Ag ions and an aqueous solution containing Pd ions; performing evaporation to dryness; and firing the carrier in air at 700 to 1,000°C for [50 - 0.047xtemperature (°C)] hours or longer.

The particulate filter of the present invention is characterized by comprising a filter base formed of a ceramic or metallic material, and the aforementioned particulate combustion catalyst supported on the filter base.

The method for producing a particulate filter of the present invention is characterized in that the method comprises impregnating an alumina porous carrier whose pore size distribution profile, as determined by means of a mercury porosimeter, has a peak falling within a range of 10 to 100 nm, with an aqueous solution containing Ag ions and an aqueous solution containing Pd ions, as catalytic components; performing evaporation to dryness; alloying Ag with Pd through firing the carrier in air at 700 to 1,000°C for [50 - 0.047xtemperature (°C)] hours or longer, to thereby form a particulate combustion catalyst; forming a slurry containing the particulate combustion catalyst; coating a filter base formed of a ceramic or metallic material with the slurry; and drying and firing the filter base.

### Effects of the Invention

The particulate combustion catalyst and the particulate filter of the present invention can remove soot through oxidation at any NOₓ concentration of exhaust gas, since oxidation reaction proceed only with oxygen; has excellent heat resistance; and, even after long-term, high-temperature treatment, can remove soot through oxidation at low temperature and high combustion rate with only small amounts of HC slip and CO slip.

### Brief Description of the Drawings

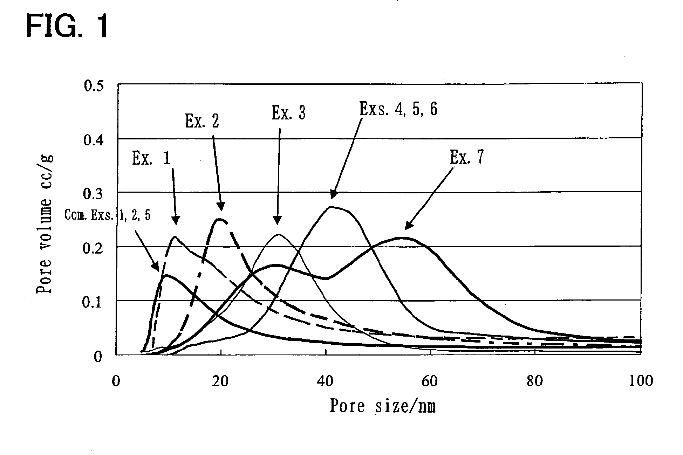

[Fig. 1] A graph showing pore size distribution profiles of La-stabilized θ-alumina species employed in Examples 1 to 7 and Comparative Examples 1, 2, and 5, the pore size distribution profiles being obtained by means of a mercury porosimeter.

### Modes for Carrying Out the Invention

In the alumina porous body employed in the present invention, the pore size distribution profile thereof, as determined by means of a mercury porosimeter, has a peak falling within a range of 10 to 100 nm, preferably 11 to 60 nm, more preferably 11 to 55 nm. As used herein, the expression "the pore size distribution profile thereof, as determined by means of a mercury porosimeter" refers specifically to the pore size distribution profile of an alumina porous body, as determined by means of a mercury porosimeter "Auto Pore IV 9520" (product of Micromeritics) at a pressure of 0.0035 to 255 MPa. When alumina whose pore size distribution profile, as determined by means of a mercury porosimeter, has a peak less than 10 nm is employed, the target effects of the present invention tend to be reduced after a long-term, high-temperature treatment, which is not preferred. In the case where alumina whose pore size distribution profile, as determined by means of a mercury porosimeter, has a peak in excess of 100 nm is employed, the mode of change in target effects of the present invention after long-term, high-temperature treatment is unclear.

The porous body of the present invention may be selected from various alumina species, such as α-alumina, γ-alumina, and θ-alumina. The alumina porous body preferably has a specific surface area of about 100 to about 200 m²/g. A porous body formed of La-stabilized (La₂O₃-stabilized) alumina is preferably employed. In the La-stabilized alumina porous body, the ratio by mass of Al₂O₃/La₂O₃ is preferably 99/1 to 93/7, more preferably 97/3 to 95/5.

The a pore size distribution profile of the La-stabilized alumina porous body employed in the present invention, as determined by means of a mercury porosimeter, preferably has a peak 10 to 100 nm, more preferably 11 to 60 nm, still more preferably 11 to 55 nm. Fig. 1 shows pore size distribution profiles of a variety of La-stabilized θ-alumina species having different peak values, the pore size distribution profiles being determined by means of a mercury porosimeter. These La-stabilized θ-alumina species are commercially available. Through use of an La-stabilized alumina porous body whose pore size distribution profile has a peak falling within a range of 10 to 100 nm, in combination with an Ag-Pd alloy, the target effects of the present invention can be favorably attained even after long-term, high-temperature treatment.

The particulate combustion catalyst of the present invention contains, as a catalytic component, an Ag-Pd alloy. In the case where the Pd content of the alloy is less than 20 mass% or in excess of 80 mass%, the effects of the present invention are poor. Thus, the alloy serving as the catalytic component employed in the present invention has an Ag content of 75 to 25 mass%, preferably 70 to 30 mass%, and a Pd content of 25 to 75 mass%, preferably 30 to 70 mass%. From the viewpoint of cost reduction, the amount of expensive Pd is preferably reduced. That is, preferably, the Ag content is 75 to 65 mass%, and the Pd content is 25 to 35 mass%.

In the particulate combustion catalyst of the present invention, the catalytic component alloy is preferably caused to be supported in an amount of 1 to 50 parts by mass, with respect to 100 parts by mass of the alumina porous carrier. When the amount of the alloy with respect to the carrier amount is less than 1 part by mass, the catalytic effect cannot be fully attained, whereas when the alloy amount is in excess of 50 parts by mass, the effect commensurate the increase cannot be attained. In the latter case, the catalytic activity per unit mass of alloy is likely to drop.

In one embodiment of the method for producing a particulate combustion catalyst of the present invention, an alumina porous carrier whose pore size distribution profile, as determined by means of a mercury porosimeter, has a peak falling within a range of 10 to 100 nm is impregnated with an aqueous solution containing Ag ions (e.g., aqueous silver nitrate solution) and an aqueous solution containing Pd ions (e.g., aqueous palladium nitrate solution), at such a ratio that the formed alloy has an Ag content of 75 to 25 mass% and a Pd content of 25 to 75 mass%, and that the amount of the alloy (catalytic component) is adjusted to 1 to 50 parts by mass, with respect to 100 parts by mass of the carrier. Then, evaporation to dryness is performed at, for example, 120°C, and the carrier is fired in air at 700 to 1,000°C, preferably 800 to 950°C, for [50 - 0.047xtemperature (°C)] hours or longer, to thereby ensure alloying of Ag with Pd.

In the method of the present invention for producing a particulate combustion catalyst, the impregnation step of the above method may be altered to the following. Specifically, an aqueous solution containing Ag ions (e.g., aqueous silver nitrate solution) and an aqueous solution containing Pd ions (e.g., aqueous palladium nitrate solution) are mixed at such a ratio that the formed alloy has an Ag content of 75 to 25 mass% and a Pd content of 25 to 75 mass%, and an alumina porous carrier (catalyst carrier) whose pore size distribution profile, as determined by means of a mercury porosimeter, has a peak falling within a range of 10 to 100 nm is added with stirring to the aqueous solution at such a ratio that the amount of the alloy (catalytic component) is adjusted to 1 to 50 parts by mass, with respect to 100 parts by mass of the carrier. Then, the resultant slurry is evaporated to dryness at, for example, 120°C, and the carrier is fired in air at 700 to 1,000°C, preferably 800 to 950°C, for [50 - 0.047xtemperature (°C)] hours or longer, to thereby ensure alloying of Ag with Pd.

In the above production method, the firing time is required to be [50 - 0.047xtemperature (°C)] hours or longer, and preferably 10 to 30 hours, more preferably 15 to 25 hours. The condition of the firing time of the present invention; i.e., [50 - 0.047xtemperature (°C)] hours or longer, has been established by numerous experiments.

In production of the particulate filter of the present invention by applying the particulate combustion catalyst of the present invention onto a filter base, a binder component such as SiO₂, TiO₂, ZrO₂, or Al₂O₃ is preferably formed on the surface of the alumina porous carrier. Through provision of a binder component on the surface of the carrier, bonding between the substrate material and the carrier is enhanced, whereby durability and heat resistance of the catalyst product can be enhanced.

The particulate filter of the present invention may have any known form of particulate filter, but a 3-dimensional structure is preferred. Specific examples of the form of filter having a 3-dimensional structure include wall-through, flow-through honeycomb, wire mesh, ceramic fiber, porous metal, particle-filled, and foam. Examples of the substrate material include ceramic materials such as cordierite and SiC, and alloys such as Fe-Cr-Al alloy and stainless alloy.

The method for producing a particulate filter of the present invention will next be described.

Firstly, an alumina porous carrier whose pore size distribution profile, as determined by means of a mercury porosimeter, has a peak falling within a range of 10 to 100 nm is impregnated with an aqueous solution containing Ag ions (e.g., aqueous silver nitrate solution) and an aqueous solution containing Pd ions (e.g., aqueous palladium nitrate solution), at such a ratio that the formed alloy has an Ag content of 75 to 25 mass% and a Pd content of 25 to 75 mass%, and that the amount of the alloy (catalytic component) is adjusted to 1 to 50 parts by mass, with respect to 100 parts by mass of the carrier. Then, evaporation to dryness is performed at, for example, 120°C, and the carrier is fired in air at 700 to 1,000°C, preferably 800 to 950°C, for [50 - 0.047xtemperature (°C)] hours or longer, to thereby ensure alloying of Ag with Pd, whereby a powder of a particulate combustion catalyst is produced. The thus-produced particulate combustion catalyst powder is mixed with water and an optional binder component such as SiO₂ or alumina sol, and the mixture is sufficiently wet-pulverized by means of a pulverizer such as a ball mill. The thus-formed slurry is applied onto a filter base such as a base of a ceramic filter. The coated filter base is subjected to evaporation to dryness at, for example, 120°C and then fired (typically at about 500°C to about 700°C), to thereby produce the particulate filter of the present invention.

Alternatively, the particulate filter of the present invention may be produced through the following procedure. Firstly, an alumina porous carrier whose pore size distribution profile, as determined by means of a mercury porosimeter, has a peak falling within a range of 10 to 100 nm is mixed with water and an optional binder component such as SiO₂ or alumina sol, and the mixture is sufficiently wet-pulverized by means of a pulverizer such as a ball mill. The thus-formed slurry is applied onto a filter base such as a base of a ceramic filter. The thus-coated carrier is then fired (typically at about 500°C to about 700°C), to form a wash coat layer. The formed wash coat layer is impregnated with a catalytic component; e.g., a mixture of aqueous silver nitrate solution and aqueous palladium nitrate solution. Subsequently, the thus-treated filter base is subjected to evaporation to dryness at, for example, 120°C, and then fired in air at 700 to 1,000°C, preferably 800 to 950°C, for [50 - 0.047xtemperature (°C)] hours or longer, to thereby ensure alloying of Ag with Pd, whereby the particulate filter of the present invention is produced.

The total amount of supported catalyst is preferably 10 to 100 g/L in the case of a wall-flow-type DPF, and 50 to 150 g/L in the case of a wire-mesh-type DPF. When the total amount of supported catalyst is excessively small, catalytic performance is unsatisfactory, whereas when the amount is excessive, back pressure to exhaust gas unavoidably increases.

The pore size distribution profile and its peak value of an alumina porous body serving as a raw material, as determined by means of a mercury porosimeter "Auto Pore IV 9520" (product of Micromeritics) at a pressure of 0.0035 to 255 MPa, are almost the same as those of an alumina porous body (i.e., filter base) on which a combustion catalyst has been supported (i.e., DPF).

### Examples

The present invention will next be described in detail by way of Examples and Comparative Examples.

### Examples 1 to 7

Any of the La-stabilized θ-alumina porous carriers whose pore size distribution profiles shown in Fig. 1, as determined by means of a mercury porosimeter, had peaks shown in Table 1, having an La₂O₃ content of 4 mass% and a specific surface area of 150 m²/g were used. Each of the alumina porous carrier was impregnated with aqueous silver nitrate solution and aqueous palladium nitrate solution, serving as catalytic components, in such amounts and at such a ratio that an alloy having an alloy composition shown in Table 1, and the supported metal amount of the alloy (parts by mass with respect to 100 parts by mass of carrier) are realized. The thus-treated carrier was subjected to evaporation to dryness at 120°C and fired at 800°C for 20 hours, to thereby alloy Ag with Pd, whereby a particulate combustion catalyst powder was yielded. Subsequently, a powder of the Ag-Pd-alloy-deposited particulate combustion catalyst (180 g), alumina sol having an alumina concentration of 20 mass% (100 g), and pure water (320 g) were mixed by means of a ball mill under wet conditions, and the thus-formed slurry was applied to an SiC DPF having a diameter of 143.8 mm and a length of 152.4 mm (300 cells/inch², wall thickness: 12 mm). Then, the DPF was dried at 120°C for 3 hours, and fired at 500°C in air for 1 hour, to thereby produce a particulate filter containing the carrier (20 g (alloy excluded)) supported on the filter base (1 L).

### Comparative Example 1

CeO₂ (15 parts by mass), Al₂O₃ sol (10 parts by mass as Al₂O₃), and pure water (280 parts by mass) were added to Al₂O₃ (75 parts by mass) whose pore size distribution profile, as determined by means of a mercury porosimeter, had a peak of 9 nm. The mixture was pulverized by means of a ball mill under wet conditions, to thereby prepare a slurry containing Al₂O₃ and CeO₂. The slurry was applied to a filter base having the same properties as those of the filter base employed in Examples 1 to 7, and the coated filter base was dried at 120°C, followed by firing at 500°C for 1 hour, to thereby produce a carrier-supported filter base. The amount of supported carrier was found to be 20 g with respect to 1 L of the filter base. The carrier-supported filter base was impregnated with a mixture of aqueous dinitrodiammineplatinum solution and aqueous palladium nitrate solution in such amounts that Pt (3.35 parts by mass) and Pd (1.65 parts by mass) were supported by 100 parts by mass of the carrier. The filter base was dried at 120°C and fired at 500°C, to thereby produce a particulate filter containing Pt (0.67 g) and Pd (0.33 g) supported on the filter base (1 L). In the particulate filter, no alloy was formed from Pt and Pd.

### Comparative Example 2

Zr sol (10 parts by mass as ZrO₂), pure water (280 parts by mass), and silver nitrate (25 parts by mass as reduced to Ag) were added to Ce-Zr composite oxide (ratio by mass: Ce/Zr = 30/70) (90 parts by mass), and the mixture was stirred, to thereby prepare form an Ag catalyst slurry. The slurry was applied to a 70% portion of a filter base having the same properties as those of the filter base employed in Examples 1 to 7, the portion being extending from the exhaust gas inlet of the filter. The thus-coated filter base was dried at 120°C for 3 hours.

Separately, CeO₂ (15 parts by mass), Al₂O₃ sol (10 parts by mass as Al₂O₃), and pure water (280 parts by mass) were added to Al₂O₃ (75 parts by mass) whose pore size distribution profile, as determined by means of a mercury porosimeter, had a peak of 9 nm. The mixture was pulverized by means of a ball mill under wet conditions. To the mixture, aqueous dinitrodiammineplatinum solution and aqueous palladium nitrate solution were added in specific amounts with mixing, to thereby prepare a Pt-Pd slurry. The Pt-Pd slurry was applied to a 30% portion of a filter base extending from the exhaust gas outlet of the filter. The thus-coated filter base was dried at 120°C for 3 hours and fired at 500°C for 1 hour, to thereby produce a particulate filter containing Ag (3.5 g), Pt (0.03 g), and Pd (0.27 g) supported on the filter base (1 L). In the particulate filter, Ag and Pt-Pd were deposited at different sites, and no alloy was formed from Ag and Pt.

### Comparative Example 3

Zr sol (10 parts by mass as ZrO₂), pure water (280 parts by mass), and silver nitrate (25 parts by mass as reduced to Ag) were added to Zr-Ce composite oxide (ratio by mass: Zr/Ce = 70/30) (90 parts by mass), and the mixture was stirred, to thereby prepare form an Ag catalyst slurry. The slurry was applied to a filter base having the same properties as those of the filter base employed in Examples 1 to 7. The thus-coated filter base was dried at 120°C for 3 hours and fired at 500°C for 1 hour, to thereby produce a particulate filter containing Ag (5 g) supported on the filter base (1 L).

### Comparative Example 4

The procedure of Example 1 was repeated, except that Zr-Ce composite oxide (ratio by mass: Zr/Ce = 70/30) was used as a carrier, to thereby produce a particulate filter containing an alloy of Ag (2.5 g) and Pd (2.5 g) supported on the filter base (1 L).

### Comparative Example 5

The procedure of Example 1 was repeated, except that Al₂O₃ whose pore size distribution profile, as determined by means of a mercury porosimeter, had a peak of 9 nm was used as an alumina porous carrier, to thereby produce a particulate filter containing an alloy of Ag (2.5 g) and Pd (2.5 g) supported on the filter base (1 L).

### <Method for measuring PM combustion rate>

Each of the particulate filters produced in Examples 1 to 7, and Comparative Examples 1 to 5 was heated at 900°C for 75 hours by an electric furnace (i.e., long-term, high-temperature treatment). Thereafter, PM combustion rate (g/min) in the presence of the particulate filter was measured through the following procedure. Table 1 shows the results.

A cordierite honeycomb oxidation catalyst having a diameter of 143.8 mm and a length of 76.2 mm (Pt: 2.4 g/L, Pd: 0.6 g/L) was installed in the exhaust pipe of a 2.4L diesel engine on the upstream side. On the downstream side of the exhaust pipe, each of the particulate filters (DPF catalysts) produced in Examples 1 to 7 and Comparative Examples 1 to 5 which had been subjected to the long-term, high-temperature treatment was installed.

### <PM collection>

The engine was operated at an engine speed of 1,100 rpm and a load of 140 Nm for 1 hour, whereby 4 g of PM contained in exhaust gas was deposited on the particulate filter (1 L).

### <PM combustion rate test>

Gas oil (JIS No. 2) was sprayed at a rate of 0.97 L/h to the exhaust pipe on the upstream side where the oxidation catalyst was placed, and a gas oil component was combusted in the presence of the oxidation catalyst, whereby the exhaust gas temperature at the inlet of the particulate filter was maintained at 600°C for 10 minutes. Under the conditions, PM deposited on the particulate filter was able to be combusted. PM combustion rate (g/min) was calculated from the change in weight of the particulate filter before and after PM combustion.

### <Determination of HC slip and CO slip>

In the above PM combustion rate test, the CO concentration and the HC concentration at the outlet of the particulate filter were measured. In the combustion for 10 minutes, the average CO concentration and the average HC concentration in the last one minute were determined, thereby providing the amounts of CO slip and HC slip.
[Table 1]

**Table 1**

| | Comparative Examples | | | | | Examples | | | | | | |
|---|---|---|---|---|---|---|---|---|---|---|---|---|
| | 1 | 2 | 3 | 4 | 5 | 1 | 2 | 3 | 4 | 5 | 6 | 7 |
| ≤100 nm Peak (nm) of alumina carrier in pore size distribution (non-alumina carrier) | 9 | 9 (+Zr-Ce composite oxide) | (Zr-Ce composite oxide) | (Zr-Ce composite oxide) | 9 | 11 | 19 | 31 | 41 | 41 | 41 | 55 |
| Supported metal amount (parts by mass to 100 parts by mass carrier) | Pt 3.35 | Ag 25 | Ag 25 | Ag 12.5 | Ag 12.5 | Ag 12.5 | Ag 12.5 | Ag 12.5 | Ag 12.5 | Ag 5.0 | Ag 2.5 | Ag 15.0 |
| | Pd 1.65 | Pt 0.15 | | Pd 12.5 | Pd 12.5 | Pd 12.5 | Pd 37.5 | Pd 4.15 | Pd 12.5 | Pd 5.0 | Pd 2.5 | Pd 5.0 |
| | | Pd 1.35 | | | | | | | | | | |
| Alloy composition (mass%) | - | - | - | Ag 50 | Ag 50 | Ag 50 | Ag 25 | Ag 75 | Ag 50 | Ag 50 | Ag 50 | Ag 75 |
| | | | | Pd 50 | Pd 50 | Pd 50 | Pd 75 | Pd 25 | Pd 50 | Pd 50 | Pd 50 | Pd 25 |
| PM combustion rate (g/min) | 0.52 | 0.37 | 0.39 | 0.60 | 0.71 | 0.70 | 0.68 | 0.71 | 0.70 | 0.70 | 0.68 | 0.70 |
| HC slip (ppm) | 20 | 360 | 1,020 | 230 | 240 | 28 | 15 | 25 | 16 | 18 | 19 | 17 |
| CO slip (ppm) | 15 | 210 | 1,000 | 300 | 380 | 19 | 6 | 38 | 10 | 11 | 15 | 11 |

As is clear from Table 1, the particulate combustion catalyst produced in Examples 1 to 7 of the present invention exhibited excellent PM combustion rate, and small amounts of HC slip and CO slip. The particulate combustion catalyst of Comparative Example 1 exhibited small amounts of HC slip and CO slip, but the PM combustion rate was unsatisfactory. The particulate combustion catalysts of Comparative Examples 2 and 3 exhibited poor PM combustion rate and large amounts of HC slip and CO slip. In particular, the amounts of HC slip and CO slip were considerably large. The particulate combustion catalysts of Comparative Examples 4 and 5 exhibited large amounts of HC slip and CO slip.

## Claims

1. Use of a particulate combustion catalyst for removing, through oxidation, particulate matter discharged from an internal diesel engine, **characterized in that** the particulate combustion catalyst comprises an alumina porous carrier whose pore size distribution profile, as determined by means of a mercury porosimeter, has a peak falling within a range of 10 to 100 nm, and, as a catalytic component, an alloy containing Ag in an amount of 75 to 25 mass% and Pd in an amount of 25 to 75 mass%, the alloy being supported on the surface of the alumina porous carrier and/or on the inner walls of pores of the alumina porous carrier.

2. Use according to claim 1, wherein the pore size distribution profile, as determined by means of a mercury porosimeter, has a peak falling within a range of 11 to 55 nm.

3. Use according to claim 1 or 2, wherein the alumina porous carrier is an La-stabilized alumina porous carrier.

4. A method for producing a particulate combustion catalyst as recited in any one of claims 1 to 3, **characterized in that** the method comprises impregnating an alumina porous carrier whose pore size distribution profile, as determined by means of a mercury porosimeter, has a peak falling within a range of 10 to 100 nm, with an aqueous solution containing Ag ions and an aqueous solution containing Pd ions; performing evaporation to dryness; and firing the carrier in air at 700 to 1,000 °C for [50 - 0.047xtemperature (°C)] hours or longer.

5. Use of a particulate filter, **characterized in that** the particulate filter comprises a filter base formed of a ceramic or metallic material, and a particulate combustion catalyst as recited in any one of claims 1 to 3 supported on the filter base.

6. A method for producing a particulate filter as recited in claim 5, **characterized in that** the method comprises impregnating an alumina porous carrier whose pore size distribution profile, as determined by means of a mercury porosimeter, has a peak falling within a range of 10 to 100 nm, with an aqueous solution containing Ag ions and an aqueous solution containing Pd ions, as catalytic components; performing evaporation to dryness; alloying Ag with Pd through firing the carrier in air at 700 to 1,000 °C for [50 - 0.047 x temperature (°C)] hours or longer, to thereby form a particulate combustion catalyst; forming a slurry containing the particulate combustion catalyst; coating a filter base formed of a ceramic or metallic material with the slurry; and drying and firing the filter base.

## Patentansprüche

1. Verwendung eines partikulären Verbrennungskatalysators, um durch Oxidation Stoffteilchen aus einem eingebauten Dieselmotor zu entfernen, **dadurch gekennzeichnet, dass** der partikuläre Verbrennungskatalysator einen porösen Aluminiumoxidträger umfasst, dessen Profil der Porengrößenverteilung, ermittelt mit Hilfe eines Quecksilberporosimeters, einen in einen Bereich von 10 bis 100 nm fallenden Peak hat und der als katalytische Komponente eine Legierung aufweist, die Ag in einer Menge von 75 bis 25 Masse-% und Pd in einer Menge von 25 bis 75 Masse-% enthält, wobei die Legierung auf der Oberfläche des porösen Aluminiumoxidträgers und/oder auf den Innenwänden von Poren des porösen Aluminiumoxidträgers getragen wird.

2. Verwendung nach Anspruch 1, wobei das Profil der Porengrößenverteilung, ermittelt mit Hilfe eines Quecksilberporosimeters, einen in einen Bereich von 11 bis 55 nm fallenden Peak hat.

3. Verwendung nach Anspruch 1 oder 2, wobei der poröse Aluminiumoxidträger ein La-stabilisierter poröser Aluminiumoxidträger ist.

4. Verfahren zur Herstellung eines partikulären Verbrennungskatalysators nach einem der Ansprüche 1 bis 3, **dadurch gekennzeichnet, dass** bei dem Verfahren ein poröser Aluminiumoxidträger, dessen Profil der Porengrößenverteilung, ermittelt mit Hilfe eines Quecksilberporosimeters, einen in einen Bereich von 10 bis 100 nm fallenden Peak hat, mit einer Ag-Ionen enthaltenden wässrigen Lösung und einer Pd-Ionen enthaltenden wässrigen Lösung imprägniert wird; eine Verdampfung zur Trockne durchgeführt wird; und der Träger an Luft bei 700 bis 1000 °C für [50-0,047 x Temperatur (°C)] Stunden oder länger gebrannt wird.

5. Verwendung eines Partikelfilters, **dadurch gekennzeichnet, dass** der Partikelfilter eine aus einem keramischen oder metallischen Material gebildete Filterbasis sowie einen auf der Filterbasis getragenen partikulären Verbrennungskatalysator nach einem der Ansprüche 1 bis 3 umfasst.

6. Verfahren zur Herstellung eines Partikelfilters nach Anspruch 5, **dadurch gekennzeichnet, dass** bei dem Verfahren ein poröser Aluminiumoxidträger, dessen Profil der Porengrößenverteilung, ermittelt mit Hilfe eines Quecksilberporosimeters, einen in einen Bereich von 10 bis 100 nm fallenden Peak hat, mit einer Ag-Ionen enthaltenden wässrigen Lösung und einer Pd-lonen enthaltenden wässrigen Lösung imprägniert wird; eine Verdampfung zur Trockne durchgeführt wird; Ag mit Pd legiert wird, indem der Träger an Luft bei 700 bis 1000°C für [50-0,047 x Temperatur (°C)] Stunden oder länger gebrannt wird, um dadurch einen partikulären Verbrennungskatalysator zu bilden; eine den partikulären Verbrennungskatalysator enthaltende Aufschlämmung gebildet wird; eine aus einem keramischen oder metallischen Material gebildete Filterbasis mit der Aufschlämmung beschichtet wird; und die Filterbasis getrocknet und gebrannt wird.

## Revendications

1. Utilisation d'un catalyseur de combustion particulaire pour éliminer, par oxydation, des matières particulaires émises par un moteur Diesel à combustion interne, **caractérisée en ce que** le catalyseur de combustion particulaire comprend un support poreux en alumine dont le profil de distribution de la taille des pores, tel que déterminé au moyen d'un porosimètre à mercure, présente un pic situé dans une plage allant de 10 à 100 nm, et, en tant que composant catalytique, un alliage contenant Ag en une quantité allant de 75 à 25 % en masse et Pd en une quantité allant de 25 à 75 % en masse, l'alliage étant porté sur la surface du support poreux en alumine et/ou sur les parois internes des pores du support poreux en alumine.

2. Utilisation selon la revendication 1, où le profil de distribution de la taille des pores, tel que déterminé au moyen d'un porosimètre à mercure, présente un pic situé dans une plage allant de 11 à 55 nm.

3. Utilisation selon la revendication 1 ou 2, où le support poreux en alumine est un support poreux en alumine stabilisé au La.

4. Procédé de production d'un catalyseur de combustion particulaire tel que défini dans l'une quelconque des revendications 1 à 3, **caractérisé en ce que** le procédé comprend l'imprégnation d'un support poreux en alumine, dont le profil de distribution de la taille des pores, tel que déterminé au moyen d'un porosimètre à mercure, présente un pic situé dans une plage allant de 10 à 100 nm, avec une solution aqueuse contenant des ions Ag et une solution aqueuse contenant des ions Pd; la réalisation d'une évaporation jusqu'à siccité; et la cuisson du support dans l'air à 700 à 1 000 °C pendant [50-0,047 x température (°C)] heures ou plus.

5. Utilisation d'un filtre à particules, **caractérisé en ce que** le filtre à particules comprend une base de filtre, formée d'un matériau céramique ou métallique, et un catalyseur de combustion particulaire tel que défini dans l'une quelconque des revendications 1 à 3, supporté sur la base de filtre.

6. Procédé de production d'un filtre à particules tel que défini dans la revendication 5, **caractérisé en ce que** le procédé comprend l'imprégnation d'un support poreux en alumine, dont le profil de distribution de la taille des pores, tel que déterminé au moyen d'un porosimètre à mercure, présente un pic situé dans une plage allant de 10 à 100 nm, avec une solution aqueuse contenant des ions Ag et une solution aqueuse contenant des ions Pd, en tant que composants catalytiques; la réalisation d'une évaporation jusqu'à siccité; la réalisation d'un alliage de Ag avec Pd par cuisson du support dans l'air à 700 à 1 000 °C pendant [50-0,047 x température (°C)] heures ou plus, pour former ainsi un catalyseur de combustion particulaire; formation d'une suspension épaisse contenant le catalyseur de combustion particulaire; le revêtement d'une base de filtre, constituée d'un matériau céramique ou métallique, avec la suspension; et le séchage et la cuisson de la base de filtre.
